# EUROPEAN PATENT SPECIFICATION

(11) **EP 4 075 330 B1**
(45) Date of publication and mention of the grant of the patent: **23.09.2026**
(21) Application number: 22315085.5
(22) Date of filing: 13.04.2022
(51) Int. Cl.: G06V 20/52, G06F 18/2413

(54) **MONITORING PROCESS OF A MANUFACTURING SYSTEM**
ÜBERWACHUNGSVERFAHREN EINES FERTIGUNGSSYSTEMS
PROCÉDÉ DE SURVEILLANCE D'UN SYSTÈME DE FABRICATION

(30) Priority: 14.04.2021 LU 102784
(43) Date of publication of application: 19.10.2022
(73) Proprietor: Dillygence SAS, 78100 St Germain-en-Laye (FR)
(72) Inventor: Patchong, Alain, 78100 St Germain-en-Laye (FR); Dindin, Meryll, 78100 St Germain-en-Laye (FR)
(74) Representative: Mellet, Valérie Martine

(56) References cited:
- CN-A- 111 798 518

## Description

### Technical field

The invention pertains to monitoring solutions for manufacturing systems such as assembly lines. The invention provides a monitoring process of a manufacturing system with a plurality of manufacturing stations for processing a workpiece. The invention also provides a method for classifying image data, notably video data, of a manufacturing process. The invention also provides a training process of a machine learning algorithm. The invention also relates to a monitoring system for a manufacturing system.

### Background of the invention

The automotive industry involves a plurality of product families which are processed through different technics. The sub parts are produced separately and then assembled in a final product, namely the vehicle or vehicle portions. These sub parts include structural elements, electronic components, energy storing means, safety components.

In order to foster quality and output, companies develop specific manufacturing systems for the sub parts and also for their step-by-step assembly. These manufacturing systems generally include several manufacturing stations wherein a workpiece is processed in order to change its chape or properties. It may be deduced from the former that a plurality of manufacturing systems is necessary for a whole vehicle. Each manufacturing system requires a dedicated technical optimization. A typical manufacturing plant in the automotive industry may comprise five hundred manufacturing stations which are connected through the workpiece flow(s).

For ensuring quality targets in each manufacturing system, an accurate monitoring is required. Sensors and cameras are used in order to acquire data during the manufacturing process. A real time monitoring offers information on currently produced elements, and allows a quick correction when a specific deviation is observed.

However, monitoring is impractical to implement on disparate manufacturing stations. In addition, it remains cumbersome to analyse the true capacities of a targeted manufacturing station in a manufacturing system since the manufacturing station of interest is subjected to "noise". Then, detecting failures from the latter becomes complicated since its performance depends on its environment, and notably of upstream or downstream manufacturing stations. For instance, the manufacturing station of interest may receive faulty workpiece. It may be belated due to an upstream workpiece shortage. As another example, in specific configurations, the manufacturing station operates in a reduced space, such that its motions are hindered.

Due to the plurality of manufacturing systems involved, several monitoring tools are requested in order to meet the accuracy target, and hence the quality requirements. Each monitoring tool, also designated as monitoring solution, request specific sensors and associated monitoring processes. In addition, these monitoring tools are generally tailored for one manufacturing station, not the entire manufacturing system receiving said manufacturing station. Therefore, known monitoring solutions do not provide relevant results for a whole manufacturing system. Several tools need to be rolled out.

In addition, each monitoring solution only applies to one manufacturing system configuration. When one parameter changes, it becomes necessary to investigate how to optimize the manufacturing system anew. This task is time consuming and may request other - or further - monitoring equipment.

The document CN111798518A provides a mechanical arm posture detection method and device. The method comprises the following steps: acquiring a to-be-detected picture containing at least one mechanical arm, and acquiring joint feature data of each joint included in the at least one mechanical arm and connecting arm feature data of each connecting arm in the to-be-detected picture; performing posture combination according to the joint feature data of all the joints and the connecting arm feature data of all the connecting arms so as to determine the posture of the at least one mechanical arm; and carrying out posture anomaly detection on each mechanical arm according to the posture of each mechanical arm in the at least one mechanical arm to obtain a posture detection result of each mechanical arm, wherein the posture detection result indicates whether the posture of the mechanical arm is abnormal or not.

However, this method does not provide data with respect to complex manufacturing systems wherein one workpiece is processed by several mechanical arms. In addition, this method is limited to static postures; which offer limited data. Then, the accuracy and the relevance of the abnormality monitoring is reduced.

### Technical problem to be solved

It is an objective of the invention to present a monitoring process, which overcomes at least some of the disadvantages of the prior art. In particular, it is an objective of the invention to ease monitoring of a manufacturing system comprising several manufacturing stations each manufacturing a workpiece. It is also an objective of the invention to provide a compromise between the ease of monitoring and the monitoring accuracy of a manufacturing system comprising several manufacturing stations each manufacturing a workpiece.

### Summary of the invention

According to a first aspect, not encompassed by the claims, it is provided a monitoring process of a manufacturing system comprising at least a first manufacturing station and a second manufacturing station which are configured for manufacturing a workpiece; the monitoring process comprising the steps of:
∘ obtaining video stream data of a moving arm cooperating with workpieces manufactured by the manufacturing system; the moving arm exhibiting an arm end optionally cooperating with the workpieces;
∘ inputting the video stream data in a convolutional neural network algorithm in order to generate an arm digital representation of the moving arm motions;
∘ computing operation data of the manufacturing system by means of the arm digital representation;
∘ inputting the operation data in a machine learning model in order to compute manufacturing data;
∘ generating a signal if the manufacturing data meet a predefined condition.

It is an aspect of the invention to provide a monitoring process in accordance with claim 1.

Preferably, the time series data comprise; at least with respect to the first manufacturing station; at least one or all of the following: a time duration since the last workpiece output from said manufacturing station, the manufacturing time duration of the last workpiece processed by said manufacturing station, the status of said manufacturing station, a time duration since the last interruption event, an event time duration of the last interruption event, a buffer status; and combinations thereof.

Preferably, at the step of computing the operation data, said operation data comprise distance data; at the step of inputting the operation data, the manufacturing data comprise distance variations; and at the step of generating the signal, the predefined condition comprises a distance variation threshold.

Preferably, the moving arm is a transporting arm transporting the workpiece from the first manufacturing station to the second manufacturing station; optionally at the step of inputting the video stream data, the animated digital representation comprises a digital combination of the workpiece and a portion of the transporting arm.

Preferably, the moving arm comprises a manufacturing tool, preferably at the arm end; at the step of inputting the video stream data, the arm digital representation comprises a representation of said arm end.

Preferably, the manufacturing data comprise a time duration between two successive workpieces cooperating with the moving arm; and the predefined condition comprises a workpiece time threshold.

Preferably, at the step of computing the time series data, the time series data comprise an arm status of the moving arm, said arm status comprising a motion state and a still state; preferably at the step of inputting the time series data, a time duration of a still state is used in order to compute the manufacturing data.

Preferably, at the step of obtaining the video stream data, said video stream data is obtained by vision means at distance from: the moving arm, the first manufacturing station and/or the second manufacturing station.

Preferably, the machine learning model comprises a machine learning ensemble method, preferably including a plurality of learning algorithms.

Preferably, the machine learning model comprises a meta estimator.

Preferably, the machine learning model comprises decision trees, preferably regression decision trees.

Preferably, the decision trees comprise polynomials.

Preferably, the monitoring process comprises a step of identification of the moving arm, and isolation of the moving arm from the environment.

Preferably, the convolutional neural network algorithm comprises a RELU activation function.

Preferably, at the step of computing the arm digital representation, said arm digital representation comprises at least one arm node representing an arm articulation.

Preferably, at the step of computing the arm digital representation, said arm digital representation comprises at least one arm portion with a volume.

Preferably, the digital representation is an animated digital representation of the moving entities and/or a moving digital representation of the moving entities.

Preferably, the moving entities are the manufacturing stations.

Preferably, at the step of generating the signal, the manufacturing data meet the predefined condition, and the video stream data of the arm and the workpiece is stored on data storing means.

Preferably, at least one of the first manufacturing station and the second manufacturing station comprises or is a workpiece buffer, the time series data or operation data comprising buffer time series data including an empty status and a workpiece available status.

Preferably, the time series data comprise arm representation time series data of the arm digital representation, the arm representation time series data comprising a still status and a motion status, at the step of inputting the time series data, the arm representation time series data are inputted in the machine learning model in order to compute the manufacturing data.

Preferably, the predefined condition is associated with at least one of: the moving arm, the first manufacturing station and the second manufacturing station, or the whole manufacturing system; the moving arm optionally being part of the first manufacturing station.

Preferably, the monitoring process comprises a step of calibration in order to estimate the size of the moving arm.

Preferably, the machine learning model is a machine learning model ensemble comprising a plurality of machine learning sub models or sub algorithms.

Preferably, the manufacturing data comprise a time duration between two subsequent workpieces transported by the moving arm, or in one of the manufacturing stations, for instance in the first manufacturing station.

Preferably, the video stream data comprise a plurality of transporting sequences wherein the moving arm transports one of the workpieces from the first manufacturing station to the second manufacturing station.

Preferably, the time series data comprise state switches.

Preferably, the video stream data comprise 2D image data.

Preferably, the video stream data comprise 3D image data.

Preferably, the moving arm comprises a forearm and an upper arm.

Preferably, the manufacturing arm is an articulated manufacturing arm.

Preferably, the manufacturing stations are at distance from one another.

Preferably, the manufacturing system comprises distances between the manufacturing stations, at the step of inputting the operation data, the distances are input data of the machine learning model.

Preferably, the operation data comprise temporal data.

Preferably, at the step of obtaining the video stream data, the moving arm executes cyclic operations, and/or cyclic moves, and/or periodical moves.

Preferably, the first manufacturing station and the second manufacturing station are different, preferably of different kind and/or with different manufacturing actions.

Preferably, the operation data comprise a dimension of at least: 5, or 8, or 10, or 12, or 15. Preferably, at the step of computing the operation data, the operation data is computed at least for the first manufacturing station and the second manufacturing station, preferably for each of the manufacturing station of the manufacturing system; by means of the arm digital representation.

It is another aspect, not encompassed by the claims, to provide a monitoring process of a manufacturing system comprising at least a first manufacturing station and a second manufacturing station which are configured for manufacturing a workpiece; the monitoring process comprising the steps of:
∘ obtaining video stream data of a moving arm transporting successive workpieces from the first manufacturing station to the second manufacturing station of the manufacturing system; the moving arm exhibiting a first end receiving the workpieces successively;
∘ inputting the video stream data in a convolutional neural network algorithm in order to generate an arm digital representation of the moving arm motions;
∘ computing time series data of the manufacturing system by means of the arm digital representation;
∘ inputting the time series data in a machine learning model in order to compute manufacturing data;
∘ generating a signal if the manufacturing data meet a predefined condition.

It is another aspect of the invention to provide a monitoring system in accordance with claim 10.

It is another aspect, not encompassed by the claims, to provide a monitoring process of a manufacturing system comprising at least a first manufacturing station and a second manufacturing station which are configured for manufacturing a workpiece; the monitoring process comprising the steps of:
∘ computing or obtaining operation data of the manufacturing system by means of the digital representation;
∘ inputting the operation data in a machine learning model in order to compute manufacturing data;
∘ generating a signal if the manufacturing data meet a predefined condition.

It is another aspect, not encompassed by the claims, to provide a monitoring system for a manufacturing system configured for manufacturing a workpiece, said manufacturing system comprising at least a first manufacturing station and a second manufacturing station; the monitoring system comprising vision means configured for acquiring video stream data of the manufacturing system; and computing means configured for:
∘ obtaining video stream data, from the vision means, of a moving arm engaging successive workpieces in the manufacturing system; the moving arm exhibiting a first end cooperating with the workpieces optionally one after the other;
∘ inputting the video stream data in a convolutional neural network algorithm in order to generate an arm digital representation of the moving arm;
∘ computing operation data, such as time series data or distance data, of the manufacturing system by means of the arm digital representation;
∘ inputting the operation data in a machine learning model in order to compute manufacturing data;
∘ generating a signal if the manufacturing data meet a predefined condition, the computing means preferably being configured for executing the monitoring process in accordance with the invention.

Preferably, the vision means comprise a plurality of camera units.

Preferably, the vision means comprise at least one lidar.

Preferably, the vision means comprise a three-dimensional camera configured for providing three-dimensional data.

Preferably, the monitoring system comprises storing means configured for selectively storing the video stream data depending on the step of generating the signal.

It is another aspect, not encompassed by the claims, to provide a monitoring system for a manufacturing system configured for manufacturing a workpiece, said manufacturing system comprising at least a first manufacturing station and a second manufacturing station; the monitoring system comprising vision means configured for acquiring video stream data of the manufacturing system; and computing means configured for:
∘ obtaining or computing operation data, such as time series data, of the manufacturing system by means of the digital representation;
∘ inputting the operation data in a machine learning model in order to compute manufacturing data;
∘ generating a signal if the manufacturing data meet a predefined condition, the computing means preferably being configured for executing the monitoring process in accordance with the invention.

It is another aspect, not encompassed by the claims, to provide a classification method for classifying image data from video stream data of a manufacturing system for a workpiece, said manufacturing system comprising at least a first manufacturing station and a second manufacturing station; the classification method comprising the steps of:
∘ optionally obtaining video stream data of a moving arm cooperating with successive workpieces in the manufacturing system, preferably in the first manufacturing station and the second manufacturing station; the moving arm exhibiting a first end meeting the workpieces one after the other;
∘ optionally inputting the video stream data in a convolutional neural network algorithm in order to generate an arm digital representation of the moving arm motions;
∘ obtaining or computing operation data, such as time series data or distance data, of the manufacturing system by means of the digital representation;
∘ inputting the operation data in a machine learning model in order to compute manufacturing data;
∘ classifying the video stream data or portion thereof in a first category if the manufacturing data meet a predefined condition, or in a second category otherwise.

It is another aspect, not encompassed by the claims, to provide a training process of a machine learning algorithm in order to obtain a trained machine learning model for monitoring a manufacturing system, said manufacturing system comprising at least a first manufacturing station and a second manufacturing station for processing a workpiece; the training process comprising the steps of:
∘ obtaining video stream data, from vision means, of a moving arm cooperating with successive workpieces in the manufacturing system; the moving arm exhibiting a first end cooperating with the workpieces one after the other;
∘ inputting the video stream data in a convolutional neural network algorithm and generating an arm digital representation of the moving arm motions with the convolutional neural network;
∘ computing time series data of the manufacturing system by means of the arm digital representation and generating training operation data and test operation data;
∘ training a machine learning algorithm by means of said training operation data and obtaining a machine learning model;
∘ testing the machine learning model with test operation data;
∘ storing the machine learning model if a loss meets a predefined criterion; and/or storing the machine learning algorithm when a loss meets a predefined criterion.

Preferably, the step of training the machine learning algorithm, an extreme gradient boosting method is used.

Preferably, the machine learning algorithm comprises a plurality of weak learner algorithms, and weights associated with the weak learner algorithms.

Preferably, the step of training comprises a step of ensemble learning.

Preferably, at the step of computing operation data, at least with respect to the first manufacturing station, the training data comprise at least one of the following: a time duration since the last workpiece processed by said manufacturing station, the manufacturing time duration of the last workpiece processed by said manufacturing station, the status of said manufacturing station; such as a real-time status; a time duration since the last interruption event, an event time duration of the last interruption event, a buffer status; and combinations thereof.

Preferably, the step of training comprises a Bayesian optimisation.

Preferably, the step of training comprises the use of light boosted trees.

Preferably, the step of training comprises a sub step of comparison by means of dynamic time wrapping in order to compare the manufacturing data with respect to the predefined condition. Preferably, the step of training comprises an ensemble learning step.

It is another aspect, not encompassed by the claims, to provide a training process of a machine learning model for monitoring a manufacturing system, said manufacturing system comprising at least a first manufacturing station and a second manufacturing station for processing a workpiece; the training process comprising the steps of: obtaining training data comprising time series data of an arm digital representation of moving arm motions corresponding to video stream data of a moving arm transporting successive workpieces from the first manufacturing station to the second manufacturing station of the manufacturing system; the moving arm exhibiting a first end receiving the workpieces one after the other; training the machine learning model by means of said training data; testing the machine learning model with test time series data; storing the machine learning model when a loss meets a predefined criterion.

It is another aspect, not encompassed by the claims, to provide a training process of a machine learning algorithm in order to obtain a machine learning model for monitoring a manufacturing system, said manufacturing system comprising at least a first manufacturing station and a second manufacturing station for processing a workpiece; the training process comprising the steps of:
∘ obtaining or computing operation data, such as time series data and/or distance data; of the manufacturing system by means of the digital representation in order to generate training operation data and test operation data;
∘ training a machine learning algorithm by means of said training operation data in order to obtain a machine learning model;
∘ testing the machine learning model with test operation data;
∘ storing the machine learning model if a loss meets a predefined criterion.

It is another aspect of the invention to provide a computer program comprising computer readable code means, which when run on a computer, cause the computer to run the monitoring process in accordance with the invention.

It is another aspect of the invention to provide a computer program product including a computer readable medium on which the computer program according to the invention is stored.

It is another aspect of the invention to provide a computer configured for carrying out the monitoring process according to the invention.

### Technical advantages of the invention

The invention offers an accurate analysis of the manufacturing system. The invention observes the arm motions through a simplified and accurate model, and then detects specific manufacturing conditions. It detects the operation conditions of the manufacturing station, and filters the "manufacturing noise". It enables an isolation of the different manufacturing stations, thereby providing a precise assessment of the integral manufacturing system.

### Brief description of the drawings

Several embodiments of the present invention are illustrated by way of figures, which do not limit the scope of the invention, wherein
- figure 1 provides a schematic illustration of a side view of a manufacturing system in accordance with a preferred embodiment of the invention;
- figure 2 provides a schematic illustration of a top view of a manufacturing system in accordance with a preferred embodiment of the invention;
- figure 3 provides a schematic illustration of a digital arm representation of a monitoring process in accordance with a preferred embodiment of the invention;
- figure 4 provides time series data of a monitoring process in accordance with a preferred embodiment of the invention;
- figure 5 provides a schematic illustration of a diagram of a monitoring process in accordance with a preferred embodiment of the invention;
- figure 6 provides a schematic illustration of a diagram of a classification method in accordance with a preferred embodiment of the invention;
- figure 7 provides a schematic illustration of a diagram of a training process in accordance with a preferred embodiment of the invention;
- figure 8A provides a schematic illustration of observed cycle times of a manufacturing station of a manufacturing system;
- figure 8B provides a schematic illustration of manufacturing data of a manufacturing station of a manufacturing system as obtained by a monitoring process in accordance with a preferred embodiment of the invention.

### Detailed description of the invention

This section describes the invention in further details based on preferred embodiments and on the figures. Similar reference numbers will be used to describe similar or the same concepts throughout different embodiments of the invention. For example, references 100, 200, and 300 respectively denote three steps of obtaining data of processes or methods in accordance with the invention.

It should be understood that the term "manufacturing" should be considered in its broadest meaning. It may be understood as a processing on a workpiece, or a plurality of sub parts. It may imply a property modification, and/or a shape modification. Manufacturing may also cover assembling sub parts where applicable.

In the current specification, the term "workpiece" should be read in its broadest meaning. The workpiece may be understood as a raw element, a semi-finished product, a finished product. It may correspond to any intermediate state of a good, from the begging. It may correspond to an element which is changed by a manufacturing station. The workpiece may designate an assembly, or sub parts which are assembled.

It should be noted that features described for a specific embodiment described herein may be combined with the features of other embodiments unless the contrary is explicitly mentioned. Features commonly known in the art will not be explicitly mentioned for the sake of focusing on the features that are specific to the invention. For example, the monitoring system in accordance with the invention is evidently powered by an electric supply, even though such supply is not explicitly referenced on the figures nor described in the description.

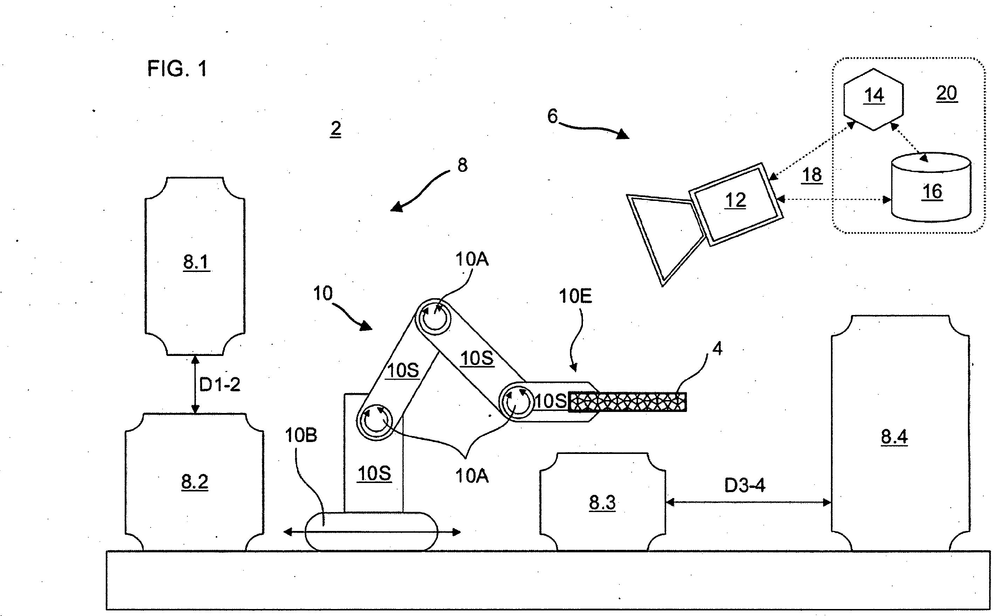

Figure 1 shows a manufacturing system 2 adapted for processing a workpiece 4. A monitoring system 6 is provided in order to monitor the manufacturing system 2 during operations.

The manufacturing system 2 includes a plurality of manufacturing stations 8, also designated as workstations 8. The manufacturing stations 8 comprises, at least, a first manufacturing station 8.1, a second manufacturing station 8.2, a third manufacturing station 8.3 a fourth manufacturing station 8.4. The manufacturing stations are at distance from one another. The manufacturing stations are distributed along the manufacturing system 2. As an option, two manufacturing stations are adjacent and/or stacked.

As an option, the first manufacturing station 8.1 is a buffer, the second manufacturing station 8.2 is a die sinking press, the third manufacturing station 8.3 is a milling machine, and the fourth manufacturing station 8.4 is a welding machine. Bending and cutting stations are considered. Other manufacturing machines, such as surface treatment stations are considered by the invention. The first station may be of a different kind than the second station. They provide different manufacturing actions on the workpiece.

The current arrangement and positioning of the manufacturing stations 8 are purely illustrative. Their manufacturing actions as well. A manufacturing system 2 in accordance with the invention also provides a configuration with a plurality of manufacturing stations 8 with the same manufacturing function, of the same kind.

It will be apparent to the skilled reader that any configuration may be considered.

A moving arm 10, such a transporting arm 10, interacts with the workpiece 4. It transports the workpiece 4. The moving arm 10 comprises an arm end 10E receiving the workpiece 4. The moving arm 10 meets the workpiece 4. The arm end 10E comprises holding means or clamping means engaging with the workpiece 4. The arm end 10E is an arm portion. It may be an arm extremity 10E.

The moving arm 10 is an articulated arm 10. The articulated arm 10 comprises a plurality of segments 10S and articulations 10A connecting the segments 10S. The moving arm 10; notably its segments 10S, defines a forearm and an upper arm. The articulations 10A allow motions between the segments 10S. Then, the moving arm is a pivoting arm. The articulations 10A comprise pivot joints, ball joints, sliding joints. The moving arm 10 comprise a fixed base 10B, or a driving base 10B moving from one manufacturing station 8 to another one.

The moving arm 10 is configured for cooperating with the workpiece 4, for instance for handling the workpiece 4. It is adapted for bringing the workpiece 4 in the manufacturing stations 8. It picks up the workpiece 4 in one manufacturing station 8 and introduce it in another manufacturing station 8 such that the workpiece 4 undergoes its very own manufacturing action.

The moving arm 10 may be shared by different manufacturing systems (only one represented). The invention considers moving arm pooling.

The moving arm is not an essential aspect of the invention. It may be replaced by a conveyor, such as a conveyor belt, or a spiral conveyor, or a vibrating conveyor.

In order to monitor, and optionally to control, the manufacturing system 2, the monitoring system 6 comprises vision means 12. The monitoring system 6 further comprises computing means 14 and storing means 16. The monitoring system 6 may comprise a communication network 18 connecting the vision means 12, the computing means 14 and the storing means 16. The communication network 18 is a wired and/or wireless network.

The computing means 14 and storing means 16 are in a computer unit 20. The storing means 16 are or comprise a computer readable medium 16, also designated as memory element 14.

The computing means 14, also designated as processing means, comprise a data processor, such as a central processing unit, CPU, of a computing device. The data processor preferably be programmed by appropriately formulated software code to implement the process steps. The computing means 14 comprise at least one processor, for instance a plurality of connected processors. The plurality of processors operates in parallel in order to train a machine learning model, and/or for computer vision tasks.

The machine learning model is an algorithm implementing a machine learning technique. Machine learning is a process using computational techniques to enable systems to learn from data or experience. Machine learning is a type of AI that gives computers the ability to learn and act without being explicitly programmed. This means that the computer model gets better over time by learning from its mistakes and new experiences (being exposed to new data), usually improving its performance. If a computer program can improve how it performs certain tasks that are based on past experiences, then it has learned. Machine learning refers to a set of methods that automatically detect patterns in data, and then use these patterns to predict future data, or to perform other kinds of decision making. Patterns may relate to correlations, causal relationships, or categories of data objects.

Generally, the machine learning model is the output of the training process of a machine learning algorithm. It is a mathematical representation of the output. The machine learning model provides a prediction. The memory element 14 comprise at least one of a: Random-Access Memory, RAM, module, or a persistent storage device such as a Hard Disk Drive, HDD, or a Solid-State Drive, SSD.

The vision means 12 comprise a plurality of 2D camera units (only one represented). As an option or an alternative, the vision means 12 comprise a three-dimension camera device, configured for 3D vision. It is configured for providing 3D image data. Then, the computing means 14 are less used.

The vision means 12 may comprise a LIDAR. The LIDAR projects light from a laser on the workpiece 4 and/or the moving arm 10. Analysing the light reflection allows for distances computation. Then, an accurate shape of the workpiece and/or the moving arm 10 is obtained in real time.

The vision means 12 are at distance from, and/or separate and distinct of, the moving arm 10 and from the manufacturing stations (8.1-8.4), preferably each manufacturing station (8.1-8.4) of the manufacturing system 2. Generally, the vision means 12 are at distance, and/or outside, the manufacturing system 2.

During manufacturing, or more generally during operation, the vision means 12 acquire video stream data. The video stream data acquire motion sequences of the moving arm 10 and the workpiece 4 when it travels in the manufacturing station 8 due to the action of the moving arm 10. The video stream data are stored temporarily on the storing means 16. They are computed by the computing means 14. They are deleted depending on the computing result. Hence, storage resources may be saved.

The computing means 14 are, notably the computer unit 20 is, configured for obtaining video stream data of a moving arm cooperating with successive workpieces manufactured by the manufacturing system 2; the moving arm exhibiting an arm end cooperating with the workpieces successively; inputting the video stream data in a convolutional neural network algorithm in order to generate an arm digital representation of the moving arm motions; computing operation data of the manufacturing system by means of the arm digital representation; inputting the operation data in a machine learning model in order to compute manufacturing data; generating a signal if the manufacturing data meet a predefined condition.

The convolutional neural network (CNN) is a feed forward neural network which is using convolution instead of matrix multiplication in at least one his layers. The feed forward neural network is an artificial neural network where information is feed from the input to the output in one direction only. It understood that the neural network is a network of primitive processing elements connected by weighted links with adjustable weights, in which each element produces a value by applying a nonlinear function to its input values, and transmits it to other elements or presents it as an output value.

The convolutional neural networks are well-known to the person skilled in the art and are described for example in "Machine Learning_A Probabilistic Perspective; from Kevin P. Murphy ; 2012-08-24; ISBN 978-0-262-01802-9. The computing means 14 and/or the computer unit 20 are/is configured for carrying out a monitoring process in accordance with the invention. The computing means 14 and/or the computer unit 20 are/is configured for carrying out a classification process in accordance with the invention.

The manufacturing system 2 comprises distances D between the manufacturing stations (8.1-8.4). The distances comprise a distance D1-2 between the first manufacturing station 8.1 and the second manufacturing station 8.2. The distances comprise a distance D3-4 between the third manufacturing station 8.3 and the fourth manufacturing station 8.4. Other distances Di-j may be defined by other pairs of manufacturing stations, where the indicia i and j correspond to the numbers of the manufacturing stations.

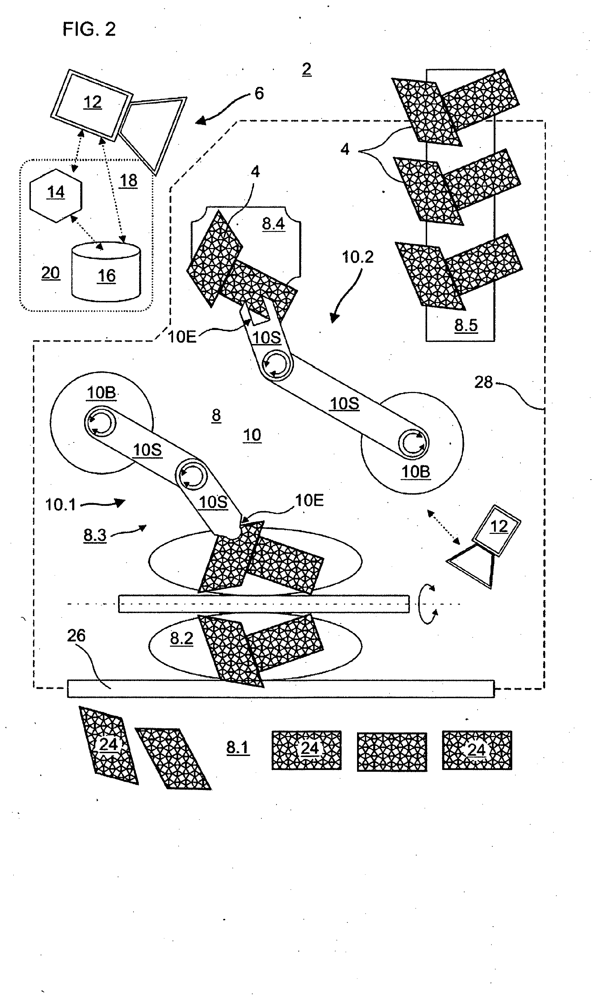

Figure 2 shows a manufacturing system 2 adapted for processing a workpiece 4, for instance for assembling sub parts 24. A monitoring system 6 is provided in order to monitor the manufacturing system 2 during operations. The manufacturing system 2 is similar to the one as described in relation with figure 1. The current figure is a plan view.

The manufacturing system 2 includes a plurality of manufacturing stations 8, also designated as workstations 8. The manufacturing stations 8 comprises, at least, a first manufacturing station 8.1, a second manufacturing station 8.2, a third manufacturing station 8.3 a fourth manufacturing station 8.4 and a fifth manufacturing station 8.5. Further manufacturing stations may be added. The manufacturing stations (8.1-8.5) are at distance from one another. The manufacturing stations are distributed in the area of the manufacturing system 2.

As an option, two manufacturing stations are adjacent. As a further option, at least one of the manufacturing stations 8 is a buffer. The buffer 8.1 contains the sub parts 24 before assembly. The buffer 8.1 exhibits a capacity, corresponding to a maximum number of elements therein. The sub parts 24 are of different shapes, and/or have different properties. As an option, the manufacturing system 2 comprises a curtain 26 isolating the moving parts, for instance for safety reasons and quality requirements. The curtain 26 may move up and down in order to introduce the sub parts 24. It is selectively in an open status and in a closed status. The manufacturing system comprises a fence 28 around the moving bodies, the curtain 26 forming a door or a window in said fence 28. The second manufacturing station 8.2 may be an assembly support, for instance with holding means which are configured for maintaining the sub parts 24. As an option, the second manufacturing station 8.2 is a rotating support, with two manufacturing zones which are selectively turned toward the buffer 8.1, or the following manufacturing stations (8.3-8.5).

The third manufacturing station 8.3 is a welding machine. The welding machine is adapted for welding the workpiece 4, and more precisely two sub parts 24 in order to joint them to each other. The sub parts 24 are welded on the second manufacturing station 8.2. The third manufacturing station 8.3 is actually considered as; and/or comprises; a moving arm 10. A moving arm 10 equips one of the manufacturing stations 8. This moving arm 10 is designated as first arm 10.1 or manufacturing arm. The arm end 10E is a welding end, or a welding device. As an alternative, the arm end 10E comprises a clinching device. The moving arm 10 engages the workpieces 4 one after the other. The workpieces 4 successively cooperate with the first moving arm 10.1. The moving arm 10 may physically touch the sub parts 24 and the workpieces 4.

The third manufacturing station 8.3 comprises an arm base 10B, a plurality of arm segments 10S which are joined by arm joints 10J. Hence, during operation, the third manufacturing station 8.3 performs arm motions acquired by the monitoring system 6.

The manufacturing system 2 further comprises a second moving arm 10.2. The second moving arm 10.2 is a transporting arm. The second moving arm 10.2 comprises an arm base 10B, a plurality of arm segments 10S which are joined by arm joints 10J. Its arm end 10E may be a clamp adapted for holding the workpiece 4, and for transporting it from the third manufacturing station 8.3 to the fourth manufacturing station 8.4; or elsewhere. The fourth manufacturing station 8.4 is a welding station adapted for adding welding spots to the sub parts 24. In addition, the fourth manufacturing station 8.4 may comprise other manufacturing means, adapted for coating, cutting, or bending the workpiece 4. As an option, the third manufacturing station 8.3 and the fourth manufacturing station 8.4 are swapped.

As an option, at least one of the manufacturing stations is a fixing station, adapted for fixing sub parts 24.

The second moving arm 10.2 is further adapted for moving the workpiece from the fourth manufacturing station 8.4 to the optional fifth manufacturing station 8.5. The fifth manufacturing station 8.5 is a conveyor belt bringing the workpiece 4 outside the manufacturing system 2, for instance toward a next manufacturing system (not represented). In order to monitor, and optionally to control, the manufacturing system 2, the monitoring system 6 comprises vision means 12. For instance, several camera units are provided at opposite sides or corners of the manufacturing system 2. The vision means 12 are arranged outside the fence 28. Thus, implementing the monitoring system 6 does not disturb the manufacturing system 2, and avoids damages since it remains protected by said fence 28.

The monitoring system 6 further comprises computing means 14 and storing means 16. The monitoring system 6 comprises a communication network 18 connecting the vision means 12, the computing means 14 and the storing means 16. The computing means 14 and storing means 16 are in a computer unit 20. The storing means 16 are or comprise a computer readable medium 16. The computing means 14 are configured for obtaining video stream data of a moving arm cooperating with successive workpieces manufactured by the manufacturing system; the moving arm exhibiting an arm end cooperating with the workpieces successively; inputting the video stream data in a convolutional neural network algorithm in order to generate an arm digital representation of the moving arm motions; computing operation data of the manufacturing system by means of the arm digital representation; inputting the operation data in a machine learning model in order to compute manufacturing data; generating a signal if the manufacturing data meet a predefined condition.

The computing means 14 are configured for carrying out a monitoring process in accordance with the invention. The computing means 14 are configured for carrying out a classification process in accordance with the invention.

Then, the invention enables an accurate monitoring of the manufacturing system, which runs in real time. By analysing the arm motions, the system and process monitor the entire system 2, and deduce actions imposed to the workpiece 4. More precisely, the system and process obtain time data, and distance data where applicable, relating the moving arm. From the former, the invention infers data at the manufacturing station level. The invention enables an automatic identification of data proper to each manufacturing station behaviour. In other words, the invention isolates the manufacturing stations and computes their time data and/or distance data. If one of the pieces of data matches one condition, a signal is emitted. This may be used for detecting a dysfunction in the manufacturing system, or a defect on the workpiece.

The invention also furnishes solution in the context of a manufacturing plant combining several manufacturing systems in accordance with figure 1, and several manufacturing systems in accordance with figure 2. Such a manufacturing plant includes a plurality of inlet for raw material or sub parts, and converges into at least one outlet for finished or semi-finished products. The monitoring process and the monitoring system focusses on the whole manufacturing plant, or on several preselected manufacturing systems. The vision means acquire video stream data about these manufacturing systems, and generate a signal upon detection of specific manufacturing conditions. Moreover, the vision means 12 may be installed and moved several times in order to monitor the manufacturing plant in different steps, iteratively. Thus, a monitoring system with a reduced number of camera units may be implemented independently of the complexity of the manufacturing system. In addition, the computer program allowing monitoring remains the same as it applies the same rules. The monitoring system generates machine learning models for each manufacturing station. The manufacturing system and/or the manufacturing plant comprises at least: 100, or 300, or 500 manufacturing stations; these manufacturing stations are monitored by the monitoring system and/or the vision means acquire video stream data of these manufacturing stations.

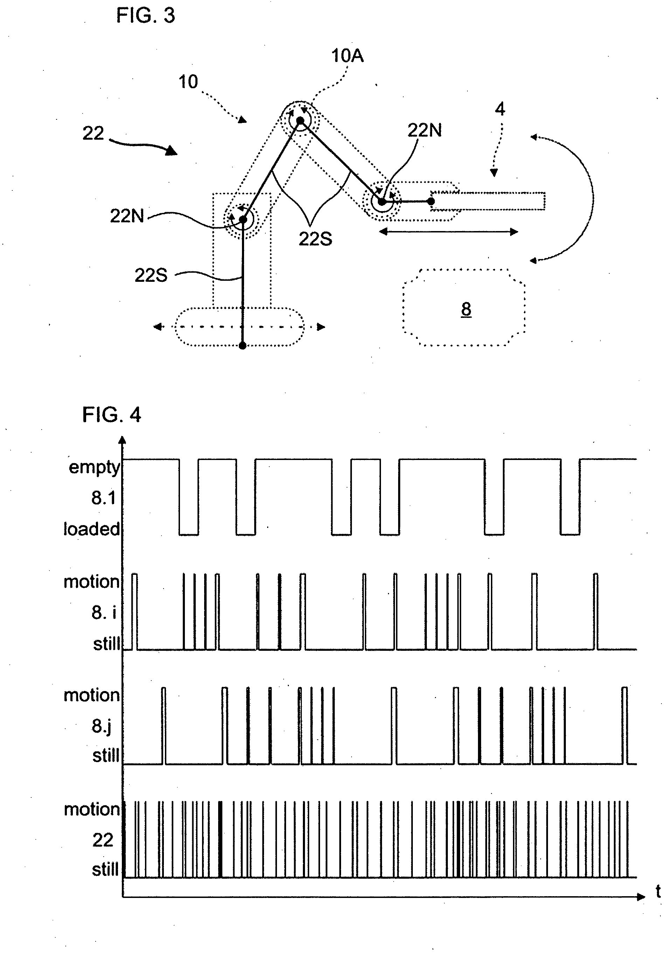

Figure 3 shows a digital representation 22 of a manufacturing system in accordance with the invention. The manufacturing system is similar or identical to manufacturing system presented in at least one of the previous figures. A workpiece 4 and an illustrative manufacturing station 8 (in dashed lines) are provided. As an option the digital representation is an arm digital representation 22, representing motions of the digital arm. A similar digital representation is computed with respect to moving entities of other manufacturing stations. Each representation is an animated representation.

Figure 3 may correspond to an image of an animation as displayed on a display unit. Figure 3 may correspond to a partial view of a user terminal with a display screen. The digital representation 22 may be created by means of computer vision, and a video stream of the moving arm.

The digital representation 22 includes arm node representations 22N and segment representations 22S. These node representations 22N and segment representations 22S are virtual ones, generated by computer. The arm nodes 22N correspond to the articulations 10A of the physical moving arm 10 (represented with a dashed line). The arm digital representation 22 is an articulated animation. The digital representation 22 offers a simplified model of the moving arm 10. The mathematical model of the arm digital representation 22 may be defined by means of its nodes 22N, which are mathematical points.

Executing processing with this simplified model requires fewer computing resources. This transformation of the real moving arm 10 into a digital representation 22 involves a computing step. Yet, it is configured for keeping motion data which is relevant for analysing the behaviour of the moving arm 10, and for a fine analysis of the manufacturing system. The digital arm representation 22 is obtained through computer vision. A convolutional neural network is used.

Figure 4 provides a schematic illustration of operation data, such as time series data, of a manufacturing system in accordance with the invention. The manufacturing system is similar or identical to those as described in relation with any figure 1 and figure 2. The operation data comprise temporal data. Preferably, the operation data are temporal data.

The time series data may correspond to events observed by the vision means. The time series data may correspond to events occurring in the manufacturing system, at least partially. The time series data illustrate states of moving parts depending on time (t).

The time series data comprise data relating to the first manufacturing station 8.1, for instance the buffer. The buffer is empty when there is no workpiece inside, or loaded when the buffer encloses at least one workpiece. The buffer may be empty because it waits for the next workpiece coming from an upstream manufacturing station, or from another manufacturing system. The data associated with the buffer is binary. As an alternative, it is a ratio, such as a filling ratio or an emptiness ratio.

The time series data may comprise data related to other manufacturing stations 8.i and 8.j, where the indicia "i" and "j" correspond to other manufacturing stations, for instance the third and the fourth, or the second and a fifth manufacturing stations. Other numbers are considered. The manufacturing stations 8.i and 8.j comprises moving parts in order to manufacture, to process, the workpiece. Depending on the actions of the manufacturing stations 8.i and 8.j, the latter may be in a still status where they stop, or in a motion status when they move or operate, or actively process the workpiece.

Another curve illustrates time series data associated with the arm digital representation 22. The current curve illustrates the still status of the digital representation 22, and its motion status when it moves. The still status is when none of its segments and nodes moves. This occurs when the moving arm maintains the workpiece at a fixed location in a manufacturing station. It occurs when the moving arm, the real one as the virtual one 22, waits for a next workpiece, or waits when a workpiece is left free in one of the manufacturing stations.

In the current illustration, only a limited number of curves related to manufacturing stations are provided. However, the invention considers time series data with data for more manufacturing stations.

In addition, motion and still statuses of the workpiece may also be used in order to compute time series data.

Position data are derived from figure 1-4. Distance data are derived from figure 1-4. Indeed, the ordinate may correspond to distance between the moving arm and a reference point. Accordingly, figure 4 illustrates the operation data.

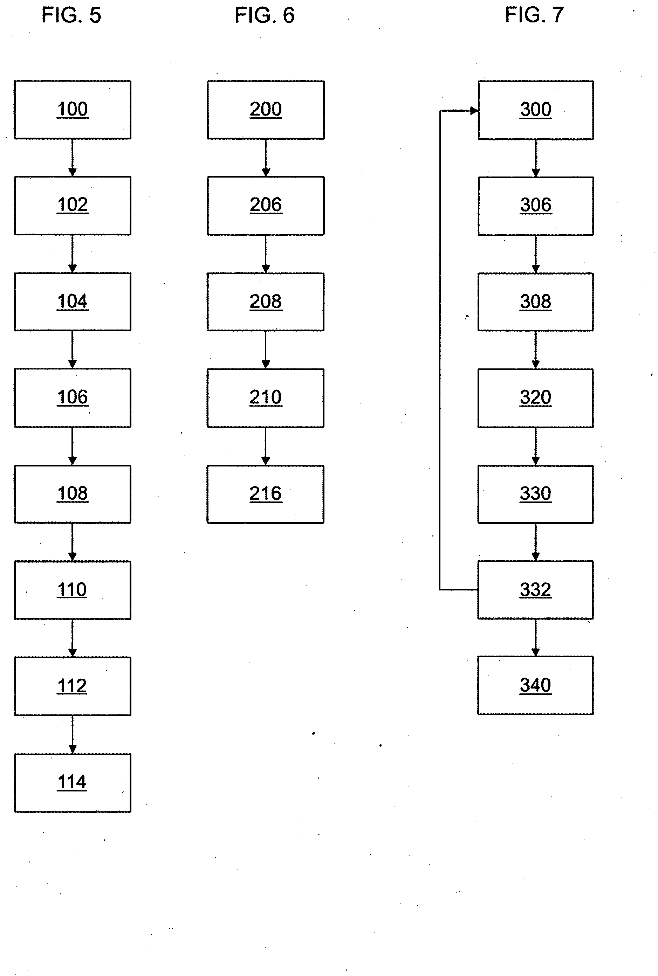

Figure 5 provides a diagram of a monitoring process in accordance with the invention. The monitoring process is adapted for monitoring a manufacturing system which is similar or identical to those detailed in relation with the previous figures.

The monitoring process comprises the following steps, notably executed as listed below:
∘ obtaining 100 video stream data of a moving arm cooperating with a workpiece in the manufacturing station, preferably transporting successive workpieces from the first manufacturing station to the second manufacturing station of the manufacturing system; the moving arm exhibiting a first end meeting, for instance physically engaging, the workpieces one after the other;
∘ calibration 102 in order to set the size of the moving arm;
∘ identification 104 of the moving arm, and isolation of the moving arm from the environment;
∘ inputting 106 the video stream data in a convolutional neural network in order to generate a digital representation of at least one moving entity of the manufacturing system, notably a digital representation of the motions of the moving arm;
∘ computing 108 operation data such as time series data and/or distance data of the manufacturing system by means of the digital representation, such as the arm digital representation;
∘ inputting 110 operation data such the time series data in a machine learning model in order to compute manufacturing data;
∘ generating 112 a signal if the manufacturing data meet a predefined condition;
∘ storing 114 the video stream data obtained at step obtaining 100 if the condition is met.

The step of calibration 102 may be a step of obtaining size data.

The step of identification 104 may be executed during the step of inputting 106 the video stream data. The step of isolation comprises a background removal. The step of background removal uses a computer algorithm. The computer algorithm is adapted for extracting movement. It allows detection of moving parts, notably the workpiece, the manufacturing stations when they enclose moving parts, and the optional moving arm. The computer algorithm identifies moving pixels, and associates the moving pixels to a specific object, such as a moving arm portion, or a portion of a manufacturing station, or the workpiece, or any other moving entity in the manufacturing station. The moving pixels may be linked to an entity depending on their momentum, such as their linear momentum. A solution involving mass centres may be used.

The step of identification 104 comprises rules in order to distinguish immobility, or motion, from immobility. These rules use motion thresholds.

At the step of inputting 106, the digital representation, such as the arm digital representation, mis an animated representation. The digital representation may be a digital signature, such as a motion signature.

The step of inputting 106 the video stream data may be a step of inputting 106 the video stream data in a convolutional neural network and generating an animated digital representation of moving entities in the manufacturing system with the convolutional neural network. The step of inputting 106 the video stream data may comprise identifying the distinct manufacturing stations, or obtaining the number of distinct manufacturing stations. The step of inputting 106 the video stream data may comprise obtaining the number of nodes of the manufacturing stations of the manufacturing stations. The step of inputting 106 the video stream data comprises inferring positions of nodes of the moving entities, recognizing movements of the nodes of the manufacturing stations, and generating an animated digital representation of moving entities; preferably the manufacturing stations; of the manufacturing system; with a convolutional neural network. The step of inputting 106 the video stream data is preferably executed with respect to each manufacturing station. The animated digital representation comprises an animation for each of the manufacturing stations. The step of inputting 106 the video stream data may use the solution 3D animate from company Deepmotion, or the solution from the company Radical, wherein the model is trained to recognise motions of manufacturing stations instead of humans. The manufacturing stations may be predefined manufacturing stations. Other solutions are considered. At the step of inputting 106 the video stream data, a pose estimator may be used.

As an option, the moving arm is a transporting arm bringing the workpiece from the first manufacturing station to the second manufacturing station and to other manufacturing stations if any. It picks up the workpiece from the buffer. At the step of inputting 106 the video stream data, the digital representation comprises a digital combination of the workpiece and a portion of the transporting arm. The digital combination merges the workpiece and a segment of the arm, such as the transporting end thereof.

At the step of generating 112, if the manufacturing data meet the predefined condition, the signal is a storing signal. It is a storing instruction, instructing the computing unit to store the video stream data obtained at step obtaining 100. Otherwise, if the manufacturing data does not meet the predefined condition, the video stream data obtained at step obtaining 100 is deleted.

The manufacturing data comprise a workpiece processing time, such as a manufacturing time, by the first manufacturing station by way of illustration, or any of the other manufacturing stations. The predefined condition may comprise a time threshold, such as a station time threshold. If the workpiece processing time is shorter than the station time threshold, the predefined condition is met at the step of generating 112, and the signal is generated. This implies that a fastmanufacturing process occurs. Specific manufacturing conditions are identified in real time, allowing to stop the manufacturing system when required, and before further damages occur. The workpiece processing time may be optional.

The manufacturing data comprise a time duration between two successive workpieces transported, and handled by the moving arm. The predefined condition comprises a workpiece time threshold. At step generating 112, if the time duration is shorter than the workpiece time threshold, then the predefined condition is met and the signal is generated. The time duration may be an option or an alternative.

The machine learning model comprises a meta estimator. It may comprise a plurality of decision trees, for instance at least one thousand decision trees. Each decision tree is a root node, a plurality of split nodes and a plurality of leaf nodes. The decision trees are regression decision trees. The decision trees comprise polynomials. The polynomials are linear polynomials. Their equations form may be written as follows: $\hat{{y}_{ι}} = {\sum }_{j} {θ}_{j} ∗ {x}_{i j}$ where *x_{i j}* is an input, and *θⱼ* is a coefficient. Non-linear polynomials are considered as well. The machine learning model comprises a plurality of machine learning estimators. The machine learning model results in a combination of sub algorithms, which receive weights.

The convolutional neural network algorithm comprises a RELU activation function. As an alternative, a sigmoid function is used. The RELU activation function lightens computation. The sigmoid increases accuracy.

At the step of computing 108 the operation data such as the time series data, data related to the nodes are used, notably the temporal data. The temporal positions of the nodes are extracted from the animated digital representation.

At the step of computing 108 the operation data such as the time series data, said time series data comprise an arm status of the moving arm. The arm status comprises a motion state and a still state. At the step of inputting 110 the operation data such as the time series data, a time duration of a still state is used in order to compute the manufacturing data.

At the step of inputting 106 the video stream data in the convolutional neural network algorithm in order to generate an arm digital representation, said arm digital representation comprises at least one arm node representing an arm articulation between two adjacent segments. At the step of computing 108 the operation data, the data associated with the arm node is used for computing, obtaining, said operation data. Using such data promotes reliability and accuracy with a light model. The operation data comprise or are temporal data. The temporal data are time related data.

The temporal data comprise time durations and/or time stamps.

As an alternative or in addition, at the step of inputting 106 the video stream data in the convolutional neural network algorithm, said arm digital representation comprises at least one arm portion with a volume. This digital volume is used in order to refine input data.

At the step of generating 112 the signal, the manufacturing data meet the predefined condition, and the video stream data of the arm and the workpiece is stored, at least partially, on data storing means. As an option, only a video frame is stored, or a video sequence is stored.

At the step of computing 108 the operation data such as the time series data, the time series data comprise buffer time series data defining the status of the buffer depending on time. The status comprises an empty status and a workpiece available status. The status corresponds to time related events. The step of computing 108 the operation data comprises measuring times or periods of the animated digital representation.

At the step of computing 108 the operation data such as the time series data, the time series data comprise arm time series data of the arm digital representation. The arm representation time series data comprise a still status and a motion status. At the step of inputting 110 the operation data such as the time series data, the arm representation time series data are injected in the machine learning model. Then the output of the machine learning model is the manufacturing data. At the step of inputting 110 the operation data, the operation data are the input of the machine learning model, and the manufacturing data is the output. The step of computing 108 the operation data comprises assessing the status of a moving entity with the animated digital representation.

With respect to the first manufacturing station, or each manufacturing station, and/or the moving arm; the time series data comprise at least one of the following: a time duration since the last workpiece output, the manufacturing time duration of the last workpiece processed by said manufacturing station, the status of said manufacturing station, a time duration since the last interruption event, an event time duration of the last interruption event, a buffer status; and combinations thereof. The last interruption event is a last break event. It is a last failure event. It may result from a workpiece shortage, or a breakdown.

The buffer status is a filling ratio. The filling ratio is measured at the step of computing 108 operation data. It corresponds to the ratio of the number of workpiece or sub parts divided by the maximum capacity. The step of computing 108 the operation data comprises computing a filing ratio based on the animated digital representation.

Preferably, at the step of computing the operation data, said operation data comprise distance data; at the step of inputting the operation data, the manufacturing data comprise distance variations; and at the step of generating the predefined condition comprises a distance variation threshold. The kinematic of the moving arm and/or the workpiece is analysed. The step of computing 108 the operation data comprises measuring the distance data with the animated digital representation. The operation data comprises a dimension of at least: 6, or 8, or 12; and uncorrelated parameters with significant variations over a long observation period, for instance of at least: one day or one week. Thanks to the machine learning model, it becomes possible to compute the specific operation data and to obtain relevant and meaningful manufacturing data. Reliable conclusions are drawn from said manufacturing data. In the context of the invention, the decision trees have proven to offer reliable results. The regression decision trees offer accurate results.

The moving arm may comprise a manufacturing tool, preferably at the arm end. At step of inputting 106 the video stream data, the arm digital representation comprises a representation of said arm end.

The invention is adapted for detecting the moving arm, and providing a simplified model of said arm. Thus, the workpiece sequence is deduced in each manufacturing station. Down-times which are independent from a specific station are subtracted from its own manufacturing time. Then, the invention offers a close model associated with each manufacturing station. In other words, the invention relies on a global observation of a manufacturing system, separates the stations, and infers station specific information useful for monitoring the system. The invention removes inner bias, and bias from the system environment. The invention involves an adaptative filter, which is adapted to the system configuration.

Features defined in relation with a moving arm may be generalised to any moving entity of the manufacturing station. By way of illustration, the associated features also apply to the workpiece and to any moving entity of the manufacturing stations.

As an option, the monitoring process comprises the following steps:
∘ obtaining 100 video stream data of successive workpieces manufactured by the first manufacturing station and the second manufacturing station of the manufacturing system;
∘ inputting 106 the video stream data in a convolutional neural network in order to generate a digital representation of moving entities in the manufacturing system;
∘ computing 108 operation data of the manufacturing system by means of the digital representation;
∘ inputting 110 the operation data in a machine learning model in order to compute manufacturing data;
∘ generating 112 a signal if the manufacturing data meet a predefined condition.

Figure 6 provides a diagram of a classification method in accordance with the invention. The classification method is adapted for classifying image data and/or video stream data of a manufacturing system. The manufacturing system is similar or identical to the ones as detailed in relation with figure 1 and/or figure 2.

The classification method comprises the following steps:
∘ obtaining 200 video stream data of a moving arm cooperating with successive workpieces of the manufacturing system; optionally the moving arm exhibits a first end receiving the workpieces one after the other;
∘ inputting 206 the video stream data in a convolutional neural network algorithm in order to generate an arm digital representation of the moving arm motions;
∘ computing 208 operation data, such as temporal data, of the manufacturing system by means of the arm digital representation;
∘ inputting 210 the operation data in a machine learning model in order to compute manufacturing data;
∘ classifying 216 the video stream data or portion thereof in a first category if the manufacturing data meet a predefined condition, or in a second category otherwise.

Then, the first category video stream data may be stored on the storing means. The video stream data; namely the second category video stream data, which do not meet the predefined condition is deleted. Then, data storing resources are saved. Only the relevant data may be kept.

Before storing and after the step of classifying 216, the first category video stream data is compressed. Then, only a proportion of video stream data is processed. Accordingly, the invention preserves the processing means.

The current classification method may be adapted to a video storing process. The operation data preferably comprise temporal data.

Figure 7 provides a diagram of a training process in accordance with the invention. The monitoring process is adapted for monitoring a manufacturing system which may be similar or identical to those as detailed in relation with figure 1 and/or figure 2.

The training process comprises the following steps:
∘ obtaining 300 video stream data, from the vision means, of a moving arm cooperating with successive workpieces in the manufacturing system; the moving arm exhibiting a first end cooperating with the workpieces one after the other;
∘ inputting 306 the video stream data in a convolutional neural network algorithm in order to generate an arm digital representation of the moving arm motions;
∘ computing 308 operation data, such as time series data and/or distance data; of the manufacturing system by means of the arm digital representation in order to generate training operation data and test operation data;
∘ training 330 the machine learning algorithm, in order to obtain a machine learning model, by means of said training operation data;
∘ testing 332 the machine learning model, with test operation data;
∘ storing 340 the machine learning model if a loss meets a predefined criterion, or resuming step obtaining 300 video stream data.

The steps of computing 308 the operation data and training 330 the machine learning algorithm, is executed with respect to the moving arm and/or to each manufacturing station.

At the step of obtaining 300 the video stream data, the video stream data are acquired during one week. Four day of video stream data are used for the training data of the step of testing 332, and one day of video stream data are used for the test data of the step of testing 332. A video stream of one week is enough for generating a satisfying machine learning model with an accuracy of at least 90% on the test data. A video stream of one month may be used in order to increase further the accuracy. The operation data preferably comprise temporal data.

At the step of computing 308 operation data, the training data is computed for at least one manufacturing station, or each of the manufacturing stations. For each manufacturing station, the training data enclose a combination of the following parameters:
- a time duration since the last workpiece processed by said manufacturing station,
- the manufacturing time duration of the last workpiece processed by said manufacturing station,
- the present status of said manufacturing station,
- a time duration since the last event, preferably for each category;
- an event time duration of the last event, preferably for each category
- a buffer status.

The above categories associated with events may correspond to event associated with the system as such; the inner events; and to event associated with the environment of the system; the outer events.

The training data, notably the operation data, comprise a dimension of at most 20. The training data, and/or the operation data comprise a dimension of at least: 5, or 6, or 8, or 10, or 12, or 15. Hence, this data comprise a large dimension which requires specific tools for analysis.

The events as mentioned above include failures, broken parts, missing pars, a congestion; such as an inner congestion or a downstream congestion.

At the step of training 320 the machine learning model, an extreme gradient boosting method is used. The machine learning model comprises a plurality of weak learner algorithms, and weights associated with the weak learner algorithms. The extreme gradient boosting offers an accurate result, and converges quickly toward a satisfying result, despite the complexity of the operation data which derives at least from: the dimension, the variation, and length of the video stream.

The training process may comprise a step of filtering 320. The step of filtering 320 is configured in order to bound the error. The training process may comprise a step of removing outliers.

The loss L may be upper bounded by M. The training process may comprise computing a machine leaning algorithm stability, notably an algorithmic stability. At the step of storing 340 the machine learning model, the machine learning model meets a generalisation condition.

The step of training 330 the machine learning model may comprise the use of a Bayesian Optimisation, BayOpt. The Bayesian Optimisation comprises several entities: a Bayesian statistical model for modelling the objective function, and an acquisition function for deciding where to sample next.

The step of training 330 is an unsupervised learning. Then, the training data is unlabelled. By comparison, the machine learning model automatically outputs extreme values associated with the arm digital representation. It identifies uncommon operation data, or classify operation data depending on one parameter of the manufacturing data. As an alternative the step of training is a supervised learning.

The step of training 330 may comprise the use of light boosted trees. The machine learning algorithm comprises thousands of different trees. The light boosted trees solution offers an accurate solution in the context of the invention. Adaptative boosting, Adaboost, is used.

The step of training 330 comprises a sub step of comparison by means of dynamic time wrapping in order to compare the manufacturing data with respect to the predefined condition.

The step of training 330 may comprise a step or sub step of ensemble learning. During ensemble learning, several sub algorithms are computed, and combined.

The step of testing 332 the machine learning model comprises computing a loss. The loss is a loss associated with the test operation data and the trained machine learning algorithm. The loss is an error. The step of testing 332 the machine learning model comprises a comparison of the loss with a loss threshold.

If a loss meets a predefined criterion, for instance if the loss is smaller than the loss threshold, step storing 340 is executed. Then, the machine learning model is actually stored. It may be selected. It is used for monitoring the manufacturing system, in the associated configuration.

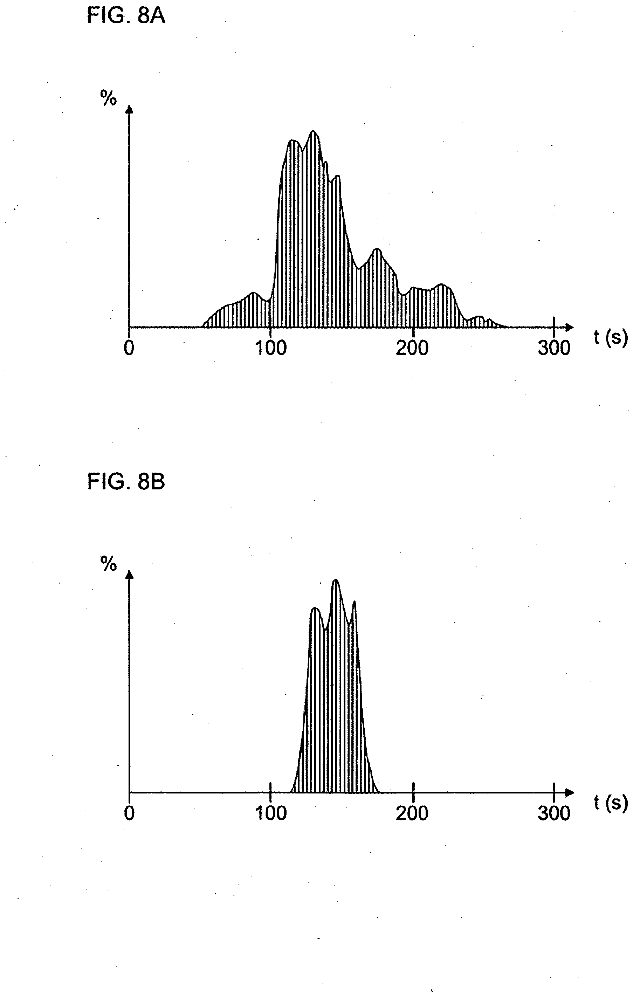

Figure 8A provides a graph illustrating observed cycle times of a manufacturing station in a manufacturing system. The observed cycle times of the manufacturing system are measured by means of video stream data, for instance as acquired in a step of obtaining 100, 200, 300 the video stream data of the processes in accordance with the invention.

The current graph illustrates different cycle times measured during one week for one of manufacturing stations of a manufacturing system. The graph represents the proportions of cycle times depending on their manufacturing time durations. The presented manufacturing times last from 50 s to 275 s. As we may notice, the proportions exhibit different proportion peaks. The maximum proportion occurs at about 130 s. The standard deviation is high. This deviation with respect to the average value is due to irregular workpiece supply upstream and/or clogging downstream. The current cycle times depend on the other manufacturing stations, and on the environment. Hence, the current graph underlines, highlights, how complex the behaviour of one isolated manufacturing station is. Such graph is obtained for each manufacturing station of the manufacturing system.

Figure 8B provides a graph illustrating manufacturing data as computed by a machine learning model as used in the monitoring process in accordance with the invention. The current manufacturing data is computed by means of the video stream data as presented in figure 8A. The manufacturing data may comprise probability data, for instance probabilities of cycle times.

The current graph offers a distribution of manufacturing data, for instance of cycle times, of one of the manufacturing stations as presented in the previous figures. The current distribution represents, for different cycle times, the corresponding proportions. The proportions are provided in percentages (%), and the cycle times in seconds (s).

As it may be observed, the highest proportion is at about 150 s. This highest proportion differs from the one obtained in figure 8A. The average value differs as well. The cycle times range from 120 s to 170 s. The standard deviation is smaller than in the illustration of figure 8A.

It is noteworthy to underlines that the cycle times in figures 8A and 8B are obtained from the same input data: the video stream data of one same week, for a same manufacturing station. However, the cycle times differ on different aspects. The invention offers a narrower time range, and a different maximum proportion. It limits the number of peaks, and the standard deviation becomes smaller. The manufacturing data in accordance with the invention is more reliable.

It may be deduced that the invention, through its machine learning model, filters events from the environment. The invention isolates a manufacturing station of interest, and computes an associated cycle time probability or distribution, in a configuration where all surrounding entities work in an ideal, perfect mode.

Then, the invention offers unbiased data matching the true capacities of each manufacturing station of a manufacturing system. The invention outputs accurate statistics useful for monitoring said manufacturing system.

Features defined in relation with operation data also applies to time series data and to distance data, and generally to temporal data.

It should be understood that the detailed description of specific preferred embodiments is given by way of illustration only, since various changes and modifications within the scope of the invention will be apparent to the person skilled in the art. The scope of protection is defined by the following set of claims.

## Claims

1. A monitoring process of a manufacturing system (2) comprising at least a first manufacturing station (8.1) and a second manufacturing station (8.2) which are configured for manufacturing a workpiece (4); the monitoring process comprises the steps of:
∘ obtaining (100) video stream data of successive workpieces (4) each manufactured by the first manufacturing station (8.1) and the second manufacturing station (8.2) of the manufacturing system (2);
∘ inputting (106) the video stream data in a convolutional neural network and generating an animated digital representation (22) of moving entities in the manufacturing system (2) with the convolutional neural network;
∘ computing (108) operation data of the manufacturing system by means of the animated digital representation (22);
∘ inputting (110) the operation data in a machine learning model and computing manufacturing data with the machine learning model and the operation data;
∘ generating (112) a signal if the manufacturing data meet a predefined condition;
wherein at the step of computing (108) the operation data, said operation data comprise time series data, and
wherein the manufacturing data comprise a workpiece (4) processing time by at least one of: the first manufacturing station (8.1), the second manufacturing station (8.2); and the predefined condition comprises a station time threshold.

2. The monitoring process in accordance with claim 1, wherein the time series data comprise; with respect to the first manufacturing station (8.1); at least one of the following: the time duration since the last workpiece output, the last manufacturing time duration, a status, a time duration since the last interruption event, the time duration of the last interruption event, a buffer status; and any combination thereof.

3. The monitoring process in accordance with any of claims 1 to 2, wherein at the step of computing (108) the operation data, said operation data comprise distance data; at the step of inputting (110) the operation data, the manufacturing data comprise distance variations; and at the step of generating (112) the signal, the predefined condition comprises a distance variation threshold.

4. The monitoring process in accordance with any of claims 1 to 3, wherein the manufacturing system comprises a moving arm (10) cooperating with the workpieces successively; the moving arm (10) exhibiting an arm end (10E) cooperating with the workpieces (4) successively, and the animated digital representation (22) comprises an arm digital representation (22).

5. The monitoring process in accordance with claim 4, wherein the monitoring process comprises a step of identification of the moving arm (10), and isolation (104) of the moving arm (10) from the environment.

6. The monitoring process in accordance with any of claims 4 to 5, wherein at the step of inputting (106) the video stream data, the animated digital representation (22) comprises at least one arm node (22N) representing an arm articulation (10A), and at the step of computing (108) the operation data the arm node is used for computing said operation data.

7. The monitoring process in accordance with any of claims 4 to 6, wherein at the step of generating (112) the signal, the manufacturing data meet the predefined condition, and the video stream data of the moving arm and the workpiece (4) are stored on data storing means (16).

8. The monitoring process in accordance with any of claims 4 to 7, wherein the predefined condition is associated with at least one of: the or a moving arm (10), the first manufacturing station (8.1) and the second manufacturing station (8.2), or the whole manufacturing system; said moving arm optionally being part of the first manufacturing station.

9. The monitoring process in accordance with any of claims 4 to 8, wherein the time series data comprise arm representation time series data of the arm digital representation (22), the arm representation time series data comprising a still status and a motion status, at the step of inputting (110) the time series data, the arm representation time series data are inputted in the machine learning model and computing the manufacturing data.

10. A monitoring system (6) for a manufacturing system configured for manufacturing a workpiece (4), said manufacturing system comprising at least a first manufacturing station (8.1) and a second manufacturing station (8.2); the monitoring system comprising vision means (12) configured for acquiring video stream data of the manufacturing system; and computing means (14; 20) configured for:
∘ obtaining video stream data of successive workpieces (4) each manufactured by the first manufacturing station (8.1) and the second manufacturing station (8.2) of said manufacturing system (2) with the convolutional neural network;
∘ inputting the video stream data in a convolutional neural network and generating an animated digital representation (22) of moving entities in the manufacturing system (2);
∘ computing time series data, of the manufacturing system by means of the animated digital representation (22);
∘ inputting the operation data in a machine learning model and computing manufacturing data with the machine learning model and the operation data;
∘ generating a signal if the manufacturing data meet a predefined condition,
wherein the manufacturing data comprise a workpiece (4) processing time by at least one of: the first manufacturing station (8.1), the second manufacturing station (8.2); and the predefined condition comprises a station time threshold,
the computing means preferably being configured for executing the monitoring process in accordance with any of claims 1 to 9.

11. The monitoring system (6) in accordance with claim 10, wherein the vision means (12) comprise a plurality of camera units, and/or the monitoring system comprises storing means (16) configured for selectively storing the video stream data depending on the step of generating the signal.

12. A computer program comprising computer readable code means, which when run on a computer (20), cause the computer to run the monitoring process in accordance with any of claims 1 to 9.

13. A computer program product including a computer readable medium (16) on which the computer program according to claim 12 is stored.

## Patentansprüche

1. Ein Verfahren zur Überwachung eines Fertigungssystems (2), das mindestens eine erste Fertigungsstation (8.1) und eine zweite Fertigungsstation (8.2) umfasst, die zum Fertigen eines Werkstücks (4) eingerichtet sind; wobei das Überwachungsverfahren die folgenden Schritte umfasst:
∘ Erhalten (100) von Videostreamdaten aufeinanderfolgender Werkstücke (4), die jeweils von der ersten Fertigungsstation (8.1) und der zweiten Fertigungsstation (8.2) des Fertigungssystems (2) gefertigt werden;
∘ Eingeben (106) der Videostreamdaten in ein neuronales Faltungsnetzwerk und Erzeugen einer animierten digitalen Darstellung (22) bewegter Entitäten im Fertigungssystem (2) mittels des neuronalen Faltungsnetzwerks;
∘ Berechnen (108) von Betriebsdaten des Fertigungssystems mittels der animierten digitalen Darstellung (22);
∘ Eingeben (110) der Betriebsdaten in ein Modell für maschinelles Lernen und Berechnen von Fertigungsdaten mittels des Modells für maschinelles Lernen und der Betriebsdaten;
∘ Erzeugen (112) eines Signals, wenn die Fertigungsdaten eine vordefinierte Bedingung erfüllen; wobei die Betriebsdaten bei dem Schritt des Berechnens (108) der Betriebsdaten
Zeitreihendaten umfassen und
wobei die Fertigungsdaten eine Bearbeitungszeit eines Werkstücks (4) durch mindestens eine der folgenden Stationen umfassen: die erste Fertigungsstation (8.1), die zweite Fertigungsstation
(8.2); und wobei die vordefinierte Bedingung einen Stationszeitschwellenwert umfasst

2. Das Überwachungsverfahren nach Anspruch 1, wobei die Zeitreihendaten in Bezug auf die erste Fertigungsstation (8.1) mindestens eines der Folgenden umfassen: die Zeitdauer seit der letzten Werkstückausgabe, die Dauer des letzten Fertigungsvorgangs, einen Status, die Zeitdauer seit dem letzten Unterbrechungsereignis, die Dauer des letzten Unterbrechungsereignisses, einen Pufferstatus und eine beliebige Kombination davon.

3. Das Überwachungsverfahren nach einem der Ansprüche 1 bis 2, wobei bei dem Schritt des Berechnens (108) der Betriebsdaten die Betriebsdaten Abstandsdaten umfassen; bei dem Schritt des Eingebens (110) der Betriebsdaten die Fertigungsdaten Abstandsänderungen umfassen; und bei dem Schritt des Erzeugens (112) des Signals die vordefinierte Bedingung einen Abstandsänderungsschwellenwert umfasst

4. Das Überwachungsverfahren nach einem der Ansprüche 1 bis 3, wobei das Fertigungssystem einen beweglichen Arm (10) umfasst, der nacheinander mit den Werkstücken zusammenwirkt; der bewegliche Arm (10) weist ein Armende (10E) auf, das nacheinander mit den Werkstücken (4) zusammenwirkt, und die animierte digitale Darstellung (22) umfasst eine digitale Armdarstellung (22).

5. Das Überwachungsverfahren nach Anspruch 4, wobei das Überwachungsverfahren einen Schritt zum Identifizieren des beweglichen Arms (10) und zum Isolieren (104) des beweglichen Arms (10) von der Umgebung umfasst.

6. Das Überwachungsverfahren nach einem der Ansprüche 4 bis 5, wobei bei dem Schritt des Eingebens (106) der Videostreamdaten die animierte digitale Darstellung (22) mindestens einen Armknoten (22N) umfasst, der ein Armgelenk (10A) darstellt, und der Armknoten bei dem Schritt des Berechnens (108) der Betriebsdaten zum Berechnen der Betriebsdaten verwendet wird.

7. Das Überwachungsverfahren nach einem der Ansprüche 4 bis 6, wobei bei dem Schritt des Erzeugens (112) des Signals die Fertigungsdaten die vordefinierte Bedingung erfüllen und die Videostreamdaten des beweglichen Arms und des Werkstücks (4) auf Datenspeichermitteln (16) gespeichert werden.

8. Das Überwachungsverfahren nach einem der Ansprüche 4 bis 7, wobei die vordefinierte Bedingung mindestens einem der folgenden Elemente zugeordnet ist: dem oder einem beweglichen Arm (10), der ersten Fertigungsstation (8.1) und der zweiten Fertigungsstation (8.2) oder dem gesamten Fertigungssystem; wobei der bewegliche Arm gegebenenfalls Teil der ersten Fertigungsstation ist.

9. Das Überwachungsverfahren nach einem der Ansprüche 4 bis 8, wobei die Zeitreihendaten Armdarstellungs-Zeitreihendaten der digitalen Armdarstellung (22) umfassen, wobei die Armdarstellungs-Zeitreihendaten einen Stillstandszustand und einen Bewegungszustand umfassen und wobei bei dem Schritt des Eingebens (110) der Zeitreihendaten die Armdarstellungs-Zeitreihendaten in das Modell für maschinelles Lernen eingegeben und die Fertigungsdaten berechnet werden

10. Ein Überwachungssystem (6) für ein zum Fertigen eines Werkstücks (4) eingerichtetes Fertigungssystem, wobei das Fertigungssystem mindestens eine erste Fertigungsstation (8.1) und eine zweite Fertigungsstation (8.2) umfasst; wobei das Überwachungssystem Bilderfassungsmittel (12), die zum Erfassen von Videostreamdaten des Fertigungssystems eingerichtet sind, sowie Rechenmittel (14; 20) umfasst, die für Folgendes eingerichtet sind:
∘ Erhalten von Videostreamdaten aufeinanderfolgender Werkstücke (4) mittels des neuronalen Faltungsnetzwerks, wobei die Werkstücke jeweils von der ersten Fertigungsstation (8.1) und der zweiten Fertigungsstation (8.2) des Fertigungssystems (2) gefertigt werden;
∘ Eingeben der Videostreamdaten in ein neuronales Faltungsnetzwerk und Erzeugen einer
animierten digitalen Darstellung (22) bewegter Entitäten im Fertigungssystem (2);
∘ Berechnen von Zeitreihendaten des Fertigungssystems mittels der animierten digitalen Darstellung (22);
∘ Eingeben der Betriebsdaten in ein Modell für maschinelles Lernen und Berechnen von Fertigungsdaten mittels des Modells für maschinelles Lernen und der Betriebsdaten;
∘ Erzeugen eines Signals, wenn die Fertigungsdaten eine vordefinierte Bedingung erfüllen, wobei die Fertigungsdaten eine Bearbeitungszeit eines Werkstücks (4) durch mindestens eine der folgenden Stationen umfassen: die erste Fertigungsstation (8.1), die zweite Fertigungsstation
(8.2); und wobei die vordefinierte Bedingung einen Stationszeitschwellenwert umfasst, wobei die Rechenmittel vorzugsweise zum Ausführen des Überwachungsverfahrens nach einem der Ansprüche 1 bis 9 eingerichtet sind.

11. Das Überwachungssystem (6) nach Anspruch 10, wobei die Bilderfassungsmittel (12) eine Vielzahl von Kameraeinheiten umfassen und/oder das Überwachungssystem Speichermittel (16) umfasst, die zum selektiven Speichern der Videostreamdaten in Abhängigkeit von dem Schritt des Erzeugens des Signals eingerichtet sind.

12. Ein Computerprogramm, das computerlesbare Codemittel umfasst, die bei Ausführung auf einem Computer (20) den Computer veranlassen, das Überwachungsverfahren nach einem der Ansprüche 1 bis 9 auszuführen.

13. Ein Computerprogrammprodukt, das ein computerlesbares Medium (16) umfasst, auf dem das Computerprogramm nach Anspruch 12 gespeichert ist.

## Revendications

1. Procédé de surveillance d'un système de fabrication (2) comprenant au moins un premier poste de fabrication (8.1) et un second poste de fabrication (8.2), qui sont configurés pour fabriquer une pièce (4) ; le procédé de surveillance comprend les étapes consistant à :
∘ obtenir (100) des données de flux vidéo de pièces successives (4), chacune étant fabriquée par le premier poste de fabrication (8.1) et le second poste de fabrication (8.2) du système de fabrication (2) ;
∘ introduire (106) les données de flux vidéo dans un réseau neuronal convolutif et générer, au moyen du réseau neuronal convolutif, une représentation numérique animée (22) d'entités en mouvement dans le système de fabrication (2) ;
∘ calculer (108) des données de fonctionnement du système de fabrication au moyen de la représentation numérique animée (22) ;
∘ introduire (110) les données de fonctionnement dans un modèle d'apprentissage automatique et calculer des données de fabrication au moyen du modèle d'apprentissage automatique et des données de fonctionnement ;
∘ générer (112) un signal si les données de fabrication satisfont à une condition prédéfinie ; dans lequel, lors de l'étape de calcul (108) des données de fonctionnement, lesdites données de fonctionnement comprennent des données de séries temporelles, et
dans lequel les données de fabrication comprennent un temps de traitement d'une pièce (4) par au moins l'un des éléments suivants : le premier poste de fabrication (8.1), le second poste de fabrication
(8.2) ; et la condition prédéfinie comprend un seuil de temps de poste.

2. Procédé de surveillance selon la revendication 1, dans lequel les données
de séries temporelles comprennent, en ce qui concerne le premier poste de fabrication (8.1), au moins l'un des éléments suivants : la durée écoulée depuis la dernière sortie d'une pièce, la dernière durée de fabrication, un état, la durée écoulée depuis le dernier événement d'interruption, la durée du dernier événement d'interruption, un état de tampon ; et toute combinaison de ceux-ci.

3. Procédé de surveillance selon l'une quelconque des revendications 1 à 2, dans lequel, lors de l'étape de calcul (108) des données de fonctionnement, lesdites données de fonctionnement comprennent des données de distance ; lors de l'étape d'introduction (110) des données de fonctionnement, les données de fabrication comprennent des variations de distance ; et, lors de l'étape de génération (112) du signal, la condition prédéfinie comprend un seuil de variation de distance.

4. Procédé de surveillance selon l'une quelconque des revendications 1 à 3, dans lequel le système de fabrication comprend un bras mobile (10) coopérant successivement avec les pièces, le bras mobile (10) présentant une extrémité du bras (10E) coopérant successivement avec les pièces (4), et la représentation numérique animée (22) comprend une représentation numérique du bras (22).

5. Procédé de surveillance selon la revendication 4, dans lequel le procédé de surveillance comprend une étape d'identification du bras mobile (10) et d'isolement (104) du bras mobile (10) de l'environnement.

6. Procédé de surveillance selon l'une quelconque des revendications 4 à 5, dans lequel, lors de l'étape d'introduction (106) des données de flux vidéo, la représentation numérique animée (22) comprend au moins un nœud de bras (22N) représentant une articulation du bras (10A), et, lors de l'étape de calcul (108) des données de fonctionnement, le nœud de bras est utilisé pour calculer lesdites données de fonctionnement.

7. Procédé de surveillance selon l'une quelconque des revendications 4 à 6, dans lequel, lors de l'étape de génération (112) du signal, les données de fabrication satisfont à la condition prédéfinie, et les données de flux vidéo du bras mobile et de la pièce (4) sont stockées dans des moyens de stockage de données (16).

8. Procédé de surveillance selon l'une quelconque des revendications 4 à 7, dans lequel la condition prédéfinie est associée à au moins l'un des éléments suivants : ledit bras mobile (10) ou un bras mobile (10), le premier poste de fabrication (8.1) et le second poste de fabrication (8.2), ou l'ensemble du système de fabrication ; ledit bras mobile faisant facultativement partie du premier poste de fabrication.

9. Procédé de surveillance selon l'une quelconque des revendications 4 à 8, dans lequel les données de séries temporelles comprennent des données de séries temporelles de représentation du bras relatives à la représentation numérique du bras (22), les données de séries temporelles de représentation du bras comprenant un état d'immobilité et un état de mouvement, et, lors de l'étape d'introduction (110) des données de séries temporelles, les données de séries temporelles de représentation du bras sont introduites dans le modèle d'apprentissage automatique et les données de fabrication sont calculées.

10. Système de surveillance (6) destiné à un système de fabrication configuré pour fabriquer une pièce (4), ledit système de fabrication comprenant au moins un premier poste de fabrication (8.1) et un second poste de fabrication (8.2) ; le système de surveillance comprenant des moyens de vision (12) configurés pour acquérir des données de flux vidéo du système de fabrication ; et des moyens de calcul (14 ; 20) configurés pour :
∘ obtenir des données de flux vidéo de pièces successives (4), chacune étant fabriquée par le premier poste de fabrication (8.1) et le second poste de fabrication (8.2) dudit système de fabrication (2), au moyen du réseau neuronal convolutif ;
∘ introduire les données de flux vidéo dans un réseau neuronal convolutif et générer une représentation numérique
animée (22) d'entités en mouvement dans le système de fabrication (2) ;
∘ calculer des données de séries temporelles du système de fabrication au moyen de la représentation numérique animée (22) ;
∘ introduire les données de fonctionnement dans un modèle d'apprentissage automatique et calculer des données de fabrication au moyen du modèle d'apprentissage automatique et des données de fonctionnement ;
∘ générer un signal si les données de fabrication satisfont à une condition prédéfinie, dans lequel les données de fabrication comprennent un temps de traitement d'une pièce (4) par au moins l'un des éléments suivants : le premier poste de fabrication (8.1), le second poste de fabrication
(8.2) ; et la condition prédéfinie comprend un seuil de temps de poste, les moyens de calcul étant de préférence configurés pour exécuter le procédé de surveillance selon l'une quelconque des revendications 1 à 9.

11. Système de surveillance (6) selon la revendication 10, dans lequel les moyens de vision (12) comprennent une pluralité d'unités de caméra, et/ou le système de surveillance comprend des moyens de stockage (16) configurés pour stocker sélectivement les données de flux vidéo en fonction de l'étape de génération du signal.

12. Programme informatique comprenant des moyens de code lisibles par ordinateur qui, lorsqu'ils sont exécutés sur un ordinateur (20), amènent l'ordinateur à exécuter le procédé de surveillance selon l'une quelconque des revendications 1 à 9.

13. Produit-programme informatique comprenant un support lisible par ordinateur (16) sur lequel le programme informatique selon la revendication 12 est stocké.
